# EUROPEAN PATENT APPLICATION

(11) **EP 4 491 496 A1**
(43) Date of publication of application: **15.01.2025**
(21) Application number: 23766539.3
(22) Date of filing: 21.02.2023
(51) Int. Cl.: B62D 57/028, B25J 5/00

(54) **ROBOT**

(30) Priority: 08.03.2022 JP 2022035736
(71) Applicant: KAWASAKI JUKOGYO KABUSHIKI KAISHA, Kobe-shi, Hyogo 650-8670 (JP)
(72) Inventor: KAMON, Masayuki, Kobe-shi, Hyogo 650-8670 (JP); KATO, Tatsuhiko, Kobe-shi, Hyogo 650-8670 (JP); YUKIZAKI, So, Kobe-shi, Hyogo 650-8670 (JP)
(74) Representative: Müller-Boré & Partner Patentanwälte PartG mbB
(86) International application number: PCT/JP2023/006166
(87) International publication number: WO 2023/171361

(57) **Abstract**

A robot (1) includes: a main body (10) on which a person is carried; a handle (23) to be gripped by the person on the main body; a moving device (30A, 30B, 30C, 30D, 90) configured to move the main body; an operation terminal (50) attachable to and detachable from the robot and configured to receive an input of a command related to an operation of the robot; and a control device (40) configured to control the robot in accordance with the command received from the operation terminal. In a state where the operation terminal is attached to the robot, the operation terminal is disposed at a position where the operation terminal is operated while the handle is gripped by the person.

## Description

### CROSS-REFERENCE TO RELATED APPLICATIONS

The present application is intended to prove the priority and the profit of JP2022-035736, which has been filed to the Japanese patent office on March 8, 2022, and is cited as a part of the present application by referring to the entire application.

### TECHNICAL FIELD

The present disclosure relates to a robot.

### BACKGROUND ART

For example, JP4482677B2 and JP4724845B2 disclose robots having rough terrain mobility. Each of the robots includes a pair of wheels disposed on both sides of a body, four legs disposed on the body at front and back ends, and a seat disposed on the body. The robots described in JP4482677B2 and JP4724845B2 move using only wheels, only legs, or wheels and legs.

### SUMMARY OF INVENTION

The robots described in JP4482677B2 and JP4724845B2 are operated by an operator seated on a seat. The present disclosure provides a robot that allows a user to operate a robot in both a riding state and a non-riding state with a simple configuration.

A robot according to an aspect of the present disclosure includes: a main body on which a person is carried; a handle to be gripped by the person on the main body; a moving device configured to move the main body; an operation terminal attachable to and detachable from the robot and configured to receive an input of a command related to an operation of the robot; and a control device configured to control the robot in accordance with the command received from the operation terminal. In a state where the operation terminal is attached to the robot, the operation terminal is disposed at a position where the operation terminal is operated while the handle is gripped by the person.

### BRIEF DESCRIPTION OF DRAWINGS

[FIG. 1] FIG. 1 is a perspective view illustrating an example of a configuration of a robot according to an embodiment.
[FIG. 2] FIG. 2 is a side view of the robot in FIG. 1.
[FIG. 3] FIG. 3 is a side view illustrating an example of a configuration of a walking state of the robot in FIG. 1.
[FIG. 4] FIG. 4 is a side view illustrating an example of a configuration of a wheel traveling state of the robot in FIG. 1.
[FIG. 5] FIG. 5 is a diagram illustrating an example of a configuration of an operation terminal in a state of being attached to the robot in FIG. 1.
[FIG. 6] FIG. 6 is a diagram illustrating an example of a configuration of the operation terminal in a state of being detached from the robot in FIG. 1.
[FIG. 7] FIG. 7 is a block diagram illustrating an example of a configuration of a controller of the robot according to the embodiment.
[FIG. 8] FIG. 8 is a diagram illustrating an example of a first screen displayed on the operation terminal according to the embodiment.
[FIG. 9] FIG. 9 is a diagram illustrating an example of a second screen displayed on the operation terminal according to the embodiment.
[FIG. 10] FIG. 10 is a side view illustrating an example of a configuration of a robot according to a modification.

### DESCRIPTION OF EMBODIMENTS

Hereinafter, an exemplary embodiment of the present disclosure will be described with reference to the drawings. The embodiment described below shows a comprehensive or specific example. Among components in the following embodiment, components that are not described in the independent claims indicating the most significant concept will be described as any component. Each drawing in the attached drawings is a schematic drawing and is not necessarily strictly illustrated. In each of the drawings, substantially the same components are denoted by the same reference numerals, and redundant description may be omitted or simplified. In the present specification and claims, the "device" may mean not only one device but also a system including a plurality of devices.

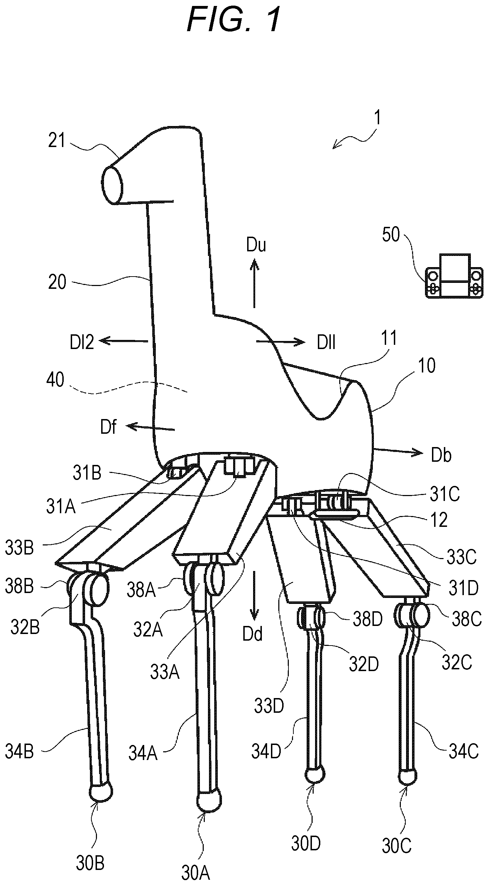

A configuration of a robot 1 according to the embodiment will be described with reference to FIG. 1. FIG. 1 is a perspective view illustrating an example of the configuration of the robot 1 according to the embodiment. Although not limited, in the present embodiment, the robot 1 is a quadruped walking robot. The robot 1 has a structure that performs quadruped walking independently or in a state where a person is placed. Although not limited, in the present embodiment, the robot 1 has an appearance imitating a four-limbed mammal, and for example, has an appearance imitating a four-limbed mammal of a body type that can be ridden by a person, such as a horse, a cow, a deer, a goat, or a sheep. The robot 1 has a structure in which one person rides over the robot 1, but may have a structure in which, for example, two or more persons aligned in front and back directions ride over the robot 1. The robot 1 may have a size equivalent to that of the above four-limbed mammal or a motorcycle, and thus may have a compact structure. The robot 1 can function as a small-sized or ultra-small-sized mobility which is an easy-moving means for a person.

The robot 1 includes a body 10, two or more leg portions, a controller 40, and an operation terminal 50. Although not limited, in the present embodiment, the robot 1 includes four leg portions 30A, 30B, 30C, and 30D that are coupled to the body 10 and perform a bending operation. The controller 40 is an example of a control device and controls the entire robot 1. The body 10 includes a seat portion 11 on which a person sits astride, at a position in an up direction Du of the body 10. The body 10 includes footrests 12 on which the person seated on the seat portion 11 places feet, at positions in a down direction Dd of the body 10.

In the present specification and claims, a "front direction Df", a "back direction Db", the "up direction Du", the "down direction Dd", and a "lateral direction Dl" of the body 10 are directions set for the body 10 with reference to the body 10. The front direction Df is a direction facing a forward direction of the robot 1 at the time of quadruped walking. The back direction Db is an opposite direction to the front direction Df. The lateral direction Dl includes a first lateral direction Dl1 and a second lateral direction Dl2. The first lateral direction Dl1 and the second lateral direction Dl2 are opposite directions, and are directions intersecting the front direction Df and the back direction Db, for example, directions perpendicular thereto. The up direction Du and the down direction Dd are opposite directions, and are directions intersecting the front direction Df, the back direction Db, the first lateral direction Dl1, and the second lateral direction Dl2, for example, directions perpendicular thereto. The up direction Du is a direction facing an up direction of the robot 1 at the time of quadruped walking.

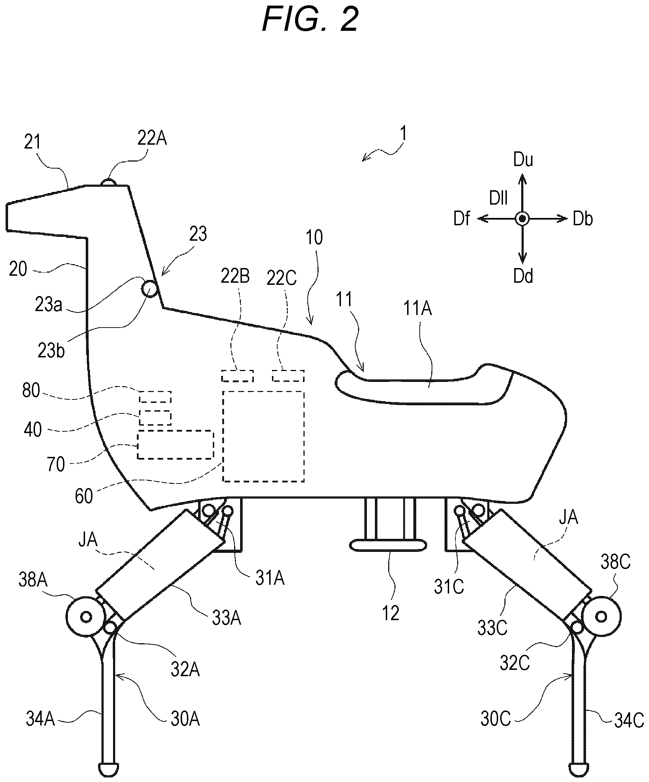

FIG. 2 is a side view of the robot 1 in FIG. 1. As illustrated in FIG. 2, the seat portion 11 includes a seat 11A extending in the back direction Db from the front direction Df. Although not limited, in the present embodiment, the seat 11A has a size that allows one person to sit astride, but may have a size that allows two or more persons to sit astride.

The two footrests 12 are disposed in the lateral directions Dl1 and Dl2 of the body 10. Although not limited, in the present embodiment, the two footrests 12 are disposed in a state of hanging down from the body 10. The footrest 12 is immovably fixed to the body 10, but may be movable so that the position thereof can be changed in the up and down directions, the front and rear directions, or a direction obtained by combining these directions.

The robot 1 further includes a neck portion 20. The neck portion 20 has a columnar shape and extends in the up direction Du from the body 10 at a position in the front direction Df with respect to the seat portion 11. The neck portion 20 is immovably fixed to the body 10 or integrated with the body 10.

The robot 1 further includes, in the neck portion 20, a handle 23 to be gripped by a person seated on the seat portion 11. Although not limited, in the present embodiment, the handle 23 protrudes in the lateral directions Dl1 and Dl2 with respect to the neck portion 20. The handle 23 is immovably fixed to the neck portion 20. The handle 23 includes a bar 23a to be gripped by the person seated on the seat portion. The bar 23a have a linear shape extending in the lateral directions Dl1 and Dl2. The handle 23 includes handle grips 23b, which are portions to be gripped by a person, at both ends of the bar 23a.

For example, the neck portion 20 is not essential, and the handle 23 may be disposed in any portion other than the neck portion 20 of the robot 1. For example, the handle 23 may be disposed on the body 10. The handle 23 may be disposed at a position where a person on the body 10, for example, seated on the seat portion 11, can grip the handle 23.

One bar 23a is disposed in the back direction Db with respect to the neck portion 20, but may penetrate the neck portion 20. Two bars 23a may extend from the neck portion 20 in the lateral directions Dl1 and Dl2. The bar 23a may be movable with respect to the neck portion 20. For example, the bar 23a may be rotatable such as a handle bar of a bicycle or a motorcycle. The structure of the handle 23 is not limited to the above, may be any structure as long as it can be gripped by a person hand, and may be, for example, a structure such as an arc-shaped or U-shaped bar extending in the lateral directions Dl1 and Dl2, a control stick of an aircraft, steering, a handrail, or a U-shape handle of an automobile, or a rein for horse riding. In this case, the handle 23 may also be immovable or movable with respect to the neck portion 20.

The robot 1 further includes a head portion 21 imitating a head portion of the four-limbed mammal at an end portion in the up direction Du of the neck portion 20. The robot 1 includes, on the head portion 21, a first sensor 22A that scans a periphery of the robot 1. The first sensor 22A outputs a signal indicating a detection result to the controller 40. The first sensor 22A may be disposed on a portion of the robot 1 other than the head portion 21. The body 10, the neck portion 20, and the head portion 21 are examples of a main body of the robot 1.

Although not limited, in the present embodiment, the first sensor 22A includes a camera. An imaging direction of the camera is oriented in the front direction Df. The first sensor 22A includes a three-dimensional camera capable of detecting a distance to a capturing object, but may include a camera simply capable of acquiring an image. Examples of the three-dimensional camera include a stereo camera, a time-of-flight-camera (TOF camera), a patterned light projection camera such as a fringe projection camera, and a camera using a light-section method. The first sensor 22A is an omnidirectional camera or a hemispherical camera having an omnidirectional field of view over 360-degree, but may be a camera with a limited field of view, such as a wide-angle camera.

The first sensor 22A may be a sensor capable of detecting a distance to an object. Such a sensor 22 performs detection using a light wave, a laser, magnetism, a radio wave, an electromagnetic wave, an ultrasonic wave or a combination of two or more thereof, and may include a photoelectric sensor, a laser sensor, a radio wave sensor, an electromagnetic wave sensor, an ultrasonic sensor, various lidars (LiDAR) or a combination of two or more thereof.

The robot 1 includes a second sensor 22B and a third sensor 22C in the body 10. The second sensor 22B detects movement of the body 10. Although not limited, in the present embodiment, the second sensor 22B includes a gyro sensor and detects an angular speed of the body 10. For example, the second sensor 22B detects an angular speed around three orthogonal axes. The second sensor 22B may further include an acceleration sensor and detect an acceleration of the body 10. For example, the second sensor 22B may detect an acceleration in three orthogonal axis directions. Such a second sensor 22B may include an inertial measurement device. The second sensor 22B outputs a signal indicating a detection result to the controller 40.

The third sensor 22C detects a position of the robot 1. For example, the third sensor 22C may detect the position of the robot 1 on the earth. The third sensor 22C may include a global navigation satellite system (GNSS), a gyro sensor, an acceleration sensor, a geomagnetic sensor, or a combination of two or more thereof. Although not limited, in the present embodiment, the third sensor 22C includes a GNSS, and uses a gyro sensor and an acceleration sensor of the second sensor 22B. By using a detection result of a position by the GNSS and a detection result of a position and a posture by the gyro sensor and the acceleration sensor, detection accuracy of the position of the robot 1 is improved. The third sensor 22C outputs a signal indicating a detection result to the controller 40. The third sensor 22C may be disposed on a portion of the robot 1 other than the body 10.

As illustrated in FIG. 1, the leg portions 30A and 30B are connected to a portion in the front direction Df of the body 10, and may function as front legs of the robot 1. The leg portions 30C and 30D are connected to a portion in the back direction Db of the body 10, and may function as rear legs of the robot 1. Connection positions between the leg portions 30A to 30D and the body 10 are not limited to the above, and may be any positions.

Each of the leg portions 30A, 30B, 30C, and 30D includes two or more joints. Although not limited, in the present embodiment, the leg portions 30A, 30B, 30C, and 30D respectively include proximal joints 31A, 31B, 31C, and 31D coupled to the body 10, and intermediate joints 32A, 32B, 32C, and 32D disposed between the proximal joints 31A, 31B, 31C, and 31D and tips of the leg portions 30A, 30B, 30C, and 30D. Further, the leg portions 30A, 30B, 30C, and 30D respectively include intermediate links 33A, 33B, 33C, and 33D, and distal links 34A, 34B, 34C, and 34D.

The intermediate links 33A to 33D couple the joints to each other to respectively form a part of frames of the leg portions 30A to 30D. The distal links 34A to 34D are respectively coupled to the intermediate joints 32A to 32D, extend to the tips of the leg portions 30A to 30D, and form a part of the frames of the leg portions 30A to 30D. Each of the proximal joints 31A to 31D is operable with two or more degrees of freedom, and each of the intermediate joints 32A to 32D is operable with one or more degrees of freedom.

Although not limited, in the present embodiment, each of the proximal joints 31A to 31D is operable with two degrees of freedom, and may be bent in a pitching direction and bent in a rolling direction with respect to the body 10. The proximal joints 31A to 31D enable the intermediate links 33A to 33D to perform a combination of swinging in the front and rear directions Df and Db, which is the pitching direction, and swinging in the lateral direction Dl1 and Dl2, which is the rolling direction. Each of the intermediate joints 32A to 32D is operable with one degree of freedom, and bends so as to change an angle formed by the intermediate links 33A to 33D and the distal links 34A to 34D. The intermediate joints 32A to 32D allow the distal links 34A to 34D to swing in the front and rear directions Df and Db, which is the pitching direction.

The robot 1 includes a plurality of joint actuators JA that drive the proximal joints 31A to 31D and the intermediate joints 32A to 32D, respectively. Each of the proximal joints 31A to 31D includes two joint actuators JA for bending in two directions. Each of the intermediate joints 32A to 32D includes one joint actuator JA for bending in one direction. Although not limited, in the present embodiment, each of the joint actuators JA includes a servomotor, a speed reducer, and a rotation sensor such as an encoder. The servomotor is controlled by the controller 40, and the rotation sensor detects a rotation amount of the servomotor and outputs a signal indicating a detection result to the controller 40. The speed reducer transmits a rotational driving force of the servomotor to the joint while decelerating from a rotational speed of the servomotor and increasing the rotational driving force.

The robot 1 further includes one or more driven wheels 38A, 38B, 38C, and 38D, which are rotatable, at the intermediate joints 32A, 32B, 32C, and 32D, respectively. The driven wheels 38A to 38D are disposed at the intermediate joints 32A to 32D, respectively, so as to come into contact with a support surface supporting the robot 1 by the operations of the proximal joints 31A to 31D and the intermediate joints 32A to 32D and to movably support the robot 1.

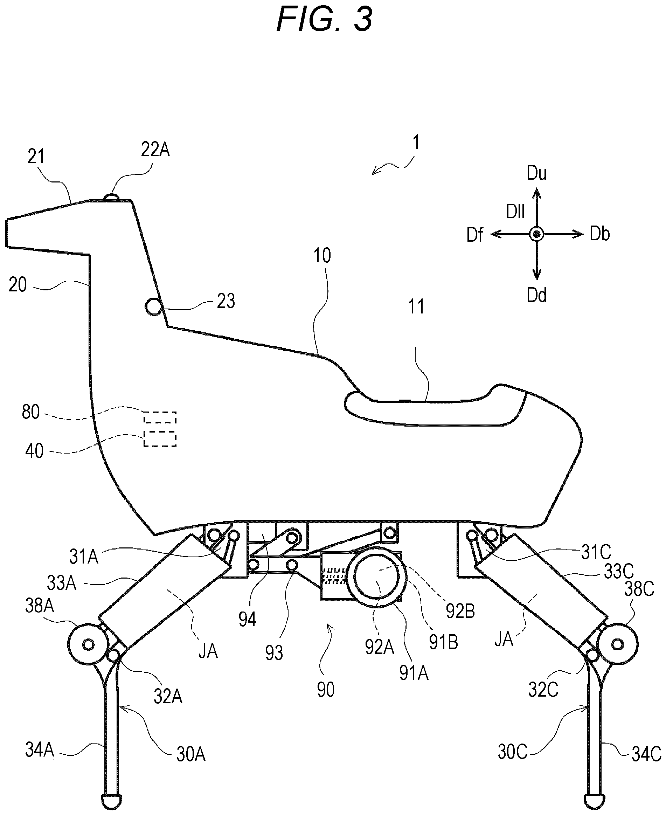

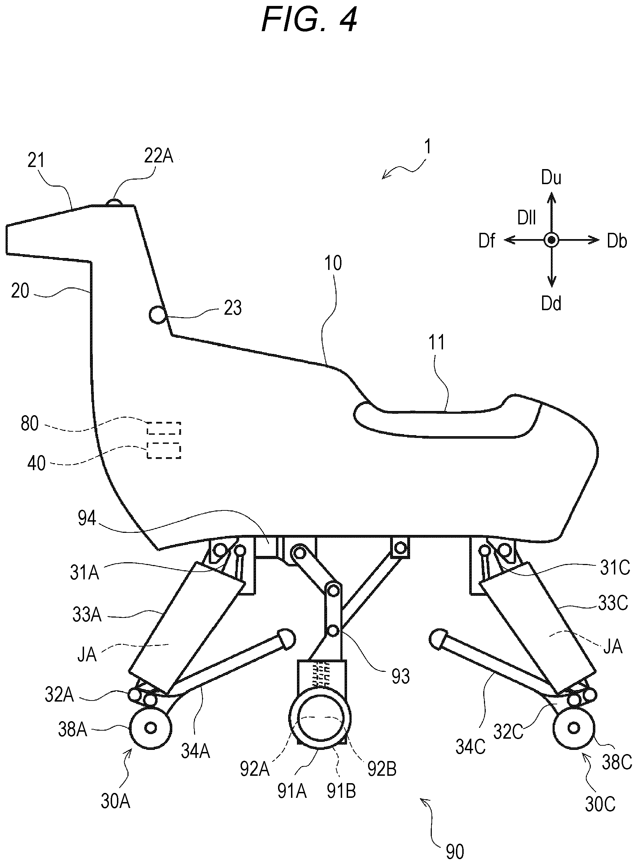

FIG. 3 is a side view illustrating an example of a configuration of a walking state of the robot 1 in FIG. 1. FIG. 4 is a side view illustrating an example of a configuration of a wheel traveling state of the robot 1 in FIG. 1. In FIGS. 3 and 4, illustration of the footrest 12 is omitted. As illustrated in FIGS. 3 and 4, the robot 1 further includes a traveling device 90 in the body 10.

The traveling device 90 can be stored in the body 10. Further, the traveling device 90 protrudes from the body 10 in the down direction Dd from a state of being stored in the body 10, may operate to come into contact with the support surface supporting the robot 1, and can move the robot 1 in a state of being in contact with the support surface.

The traveling device 90 includes traveling wheels 91A and 91B, first actuators 92A and 92B, a support 93, and a second actuator 94. The first actuators 92A and 92B rotationally drive the traveling wheels 91A and 91B, respectively, and are examples of wheel actuators. The second actuator 94 operates the support 93. Each of the actuators 92A, 92B, and 94 includes a servomotor, a speed reducer, and a rotation sensor such as an encoder. The servomotor is controlled by the controller 40, and the rotation sensor outputs a signal indicating a detection result of a rotation amount of the servomotor to the controller 40. The speed reducer transmits a rotational driving force of the servomotor to a driving target.

The support 93 is disposed and fixed to the body 10, and supports the traveling wheels 91A and 91B on the body 10. Although not limited, in the present embodiment, the support 93 includes a link mechanism including a plurality of links connected to one another so as to be capable of operating, and supports the traveling wheels 91A and 91B so as to be rotatable on the same axis at a tip portion of the link mechanism. The support 93 is operated by a driving force of the second actuator 94 so as to move the traveling wheels 91A and 91B between a first position and a second position. At the first position, the traveling wheels 91A and 91B protrude from the body 10 in the down direction Dd, as illustrated in FIG. 4. At the second position, the traveling wheels 91A and 91B approach the body 10 and are stored in the body 10, as illustrated in FIG. 3.

For example, in the walking state, the controller 40 controls the second actuator 94 such that the traveling wheels 91A and 91B are stored at the second position, as illustrated in FIG. 3. The controller 40 controls the joint actuators JA of the leg portions 30A to 30D such that the tips of the distal links 34A to 34D are brought into contact with the support surface of the robot 1 to cause the leg portions 30A to 30D to perform a walking operation.

In the wheel traveling state, the controller 40 controls the joint actuators JA of the leg portions 30A to 30D so as to bring the driven wheels 38A to 38D into contact with the support surface of the robot 1, as illustrated in FIG. 4. The controller 40 controls the second actuator 94 such that the traveling wheels 91A and 91B protrude to the first position.

The controller 40 controls the first actuators 92A and 92B to drive the traveling wheels 91A and 91B. The controller 40 moves the robot 1 forward or backward by rotationally driving the traveling wheels 91A and 91B in the same rotation direction and at the same rotational speed. The controller 40 turns the robot 1 leftward or rightward by rotationally driving the traveling wheels 91A and 91B in the same rotation direction and at different rotational speeds, or in different rotation directions. The controller 40 may drive the joint actuators JA of the proximal joints 31A to 31D to turn the intermediate links 33A to 33D, thereby turning the robot 1 leftward or rightward.

As illustrated in FIG. 2, the robot 1 further includes the controller 40, a secondary battery module 60, a power supply circuit 70, and a second communication device 80 in the body 10. Although not limited, in the present embodiment, the controller 40, the secondary battery module 60, the power supply circuit 70, and the second communication device 80 are disposed in a portion of the body 10 located in the front direction Df of the seat portion 11 on the body 10. The secondary battery module 60 functions as a power source of the robot 1. The secondary battery module 60 includes one or more secondary batteries. The secondary battery is a battery capable of charging and discharging power. Examples of the secondary battery may include a lead storage battery, a lithium ion secondary battery, an all-solid-state battery, a nickel-hydrogen storage battery, and a nickel-cadmium storage battery. The secondary battery module 60 is an example of a battery.

The power supply circuit 70 is a circuit that controls supply and demand of power to the secondary battery module 60. The power supply circuit 70 performs power control according to a command or the like from the controller 40. For example, the power supply circuit 70 may include devices such as a converter, an inverter, a transformer, and an amplifier.

The power supply circuit 70 is connected to an external power supply such as a commercial power supply. The power supply circuit 70 receives supply of power from the external power supply, and supplies the power to the secondary battery module 60 to store the power. The power supply circuit 70 controls the power supplied to the secondary battery module 60. The power supply circuit 70 supplies the power stored in the secondary battery module 60 to components that consume power in the robot 1. The power supply circuit 70 controls the power supplied to each component. The power supply circuit 70 supplies power stored in the secondary battery module 60 to the operation terminal 50 connected to the robot 1 while controlling the power

The second communication device 80 is a device for performing wireless communication with the operation terminal 50. The second communication device 80 may perform wireless communication directly or indirectly with a first communication device 51 for wireless communication included in the operation terminal 50. In indirect wireless communication, the communication devices 51 and 80 are connected to a communication network via wireless communication and communicates with each other via the communication network. Wireless communication used by the communication devices 51 and 80 is not particularly limited.

The communication network is not particularly limited, and may include, for example, a local area network (LAN), a wide area network (WAN), the Internet, or a combination of two or more thereof. The communication network may use near field communication such as Bluetooth (registered trademark) and ZigBee (registered trademark), a network dedicated line, a communication carrier dedicated line, a public switched telephone network (PSTN), a mobile communication network, an Internet network, satellite communication, or a combination of two or more thereof. The mobile communication network may use a fourth-generation mobile communication system, a fifth-generation mobile communication system, or the like. The communication network may include one or a plurality of networks.

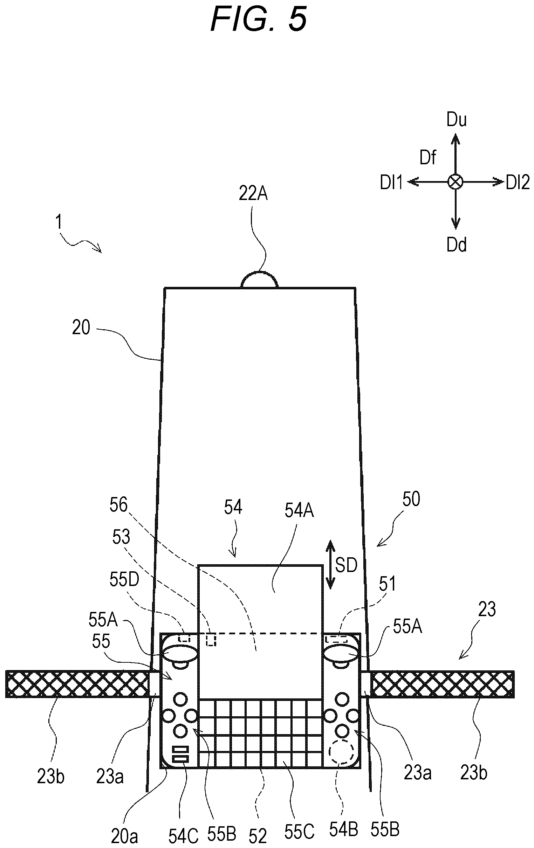

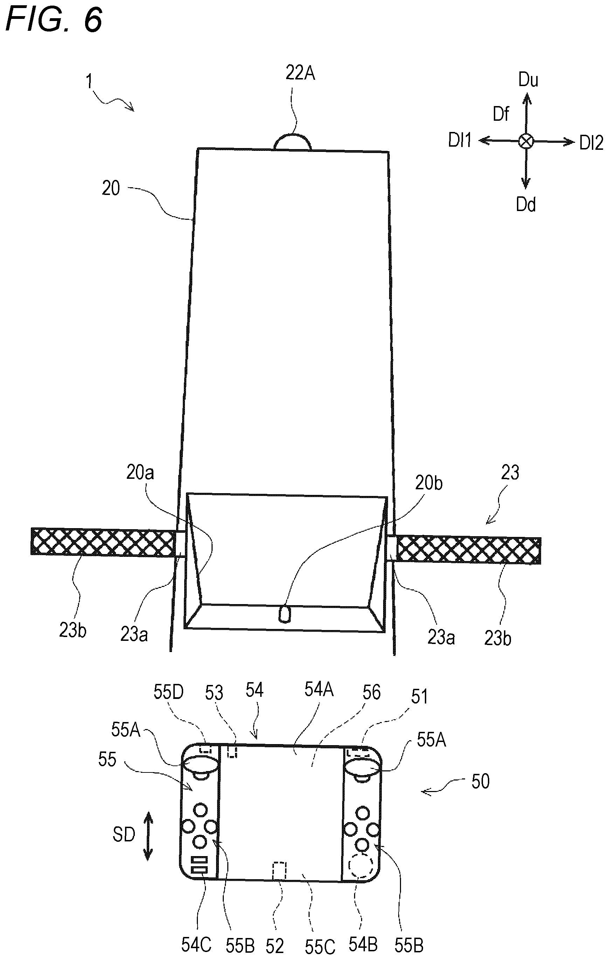

FIG. 5 is a diagram illustrating an example of a configuration of the operation terminal 50 in a state of being attached to the robot 1 in FIG. 1. FIG. 6 is a diagram illustrating an example of a configuration of the operation terminal 50 in a state of being detached from the robot 1 in FIG. 1. As illustrated in FIGS. 5 and 6, the robot 1 and the operation terminal 50 are configured such that the operation terminal 50 is attachable to and detachable from the robot 1. Although not limited, in the present embodiment, the operation terminal 50 is attachable to and detachable from the neck portion 20. For example, the neck portion 20 may include a holder such as a table, a stand, or a mount for holding the operation terminal 50, a recess or a hole with which at least a part of the operation terminal 50 is engaged or fitted, or a combination thereof. Although not limited, in the present embodiment, the operation terminal 50 is held by the neck portion 20 by fitting a part of the operation terminal 50 into a recess 20a disposed in the neck portion 20. That is, the operation terminal 50 is attached to the robot 1.

The operation terminal 50 in a state of being attached to the robot 1 is disposed at a position in the vicinity of the handle 23 such that a person can operate the operation terminal 50 while gripping the handle grips 23b with one or both of two hands. Although not limited, in the present embodiment, the recess 20a is disposed at a position where a person can operate the operation terminal 50 while gripping the handle grips 23b with two hands. The recess 20a is disposed between the handle grips 23b.

The operation terminal 50 receives an input of a command relating to an operation of the robot 1, and outputs a signal of information, a command, or data corresponding to received input content to the controller 40. The operation terminal 50 communicates with the controller 40 via wireless communication, wired communication, or both. Although not limited, in the present embodiment, the operation terminal 50 uses both wireless communication and wired communication. The operation terminal 50 can operate the robot 1 regardless of whether the operation terminal 50 is connected to the robot 1 via wireless communication or wired communication. The operation terminal 50 includes the first communication device 51 for wireless communication and a first terminal 52 for wired connection.

The first communication device 51 performs wireless communication with the second communication device 80 of the robot 1. Structures of the communication devices 51 and 80 are not particularly limited, but may be any structure suitable for wireless communication to be used.

The first terminal 52 has a structure capable of transmitting and receiving a signal, but may have a structure capable of supplying and demanding power. The first terminal 52 has a structure connectable to a terminal 20b disposed on the neck portion 20. The terminal 20b is connected to the controller 40. Any wired communication may be used between the terminals 52 and 20b.

In a state where the first terminal 52 is connected to the terminal 20b, the operation terminal 50 may communicate with the controller 40, but may receive power supply from the secondary battery module 60. The structures of the terminals 52 and 20b are not particularly limited, but may be any structure suitable for wired communication and power supply to be used.

For example, the terminals 52 and 20b may have structures in which the terminals 52 and 20b are fitted or engaged with each other to transfer an electronic signal and power, or may have structures in which the terminals 52 and 20b are brought into contact with each other to transfer an electronic signal and power One or both of the terminals 52 and 20b may be connected to a cable and may be changed in position. One or both of the terminals 52 and 20b may be fixed to the operation terminal 50 and the neck portion 20. Although not limited, in the present embodiment, the terminal 20b has a structure like one or more pins or headers protruding in the recess 20a, and the first terminal 52 has a structure like a jack or a receptacle for receiving the terminal 20b. In the present specification and claims, the "terminal" includes a connector such as a plug, a jack, a receptacle, or an adapter.

The operation terminal 50 further includes one or more second terminals 53, a presentation device 54, an input device 55, and a power source 56. The power source 56 supplies power to components of the operation terminal 50. The power source 56 may include a power supply circuit that receives power supply from an external power supply such as a commercial power supply, a primary battery, a secondary battery, or a combination of two or more thereof. The primary battery is a battery capable of discharging stored power Although not limited, in the present embodiment, the power source 56 includes at least a secondary battery. The second terminal 53 is a terminal that connects the operation terminal 50 and an external device. For example, the second terminal 53 may have a structure like a jack or receptacle such as an earphone jack or a USB interface.

The presentation device 54 presents various information related to the robot 1. Although not limited, in the present embodiment, the presentation device 54 includes a display 54A, a speaker 54B, and a display lamp 54C such as an indicator lamp and a warning lamp. The display 54A is a touch panel having an input function by contact and a screen display function, but may have only the screen display function.

The input device 55 receives various inputs and outputs received input information to the controller 40. The input device 55 is an example of an operation element. The input device 55 may include one or more of a joystick, a key, a slide switch, a button switch, a lever, and a microphone.

Although not limited, in the present embodiment, the input device 55 includes two joysticks 55A, a plurality of button switches 55B, a keyboard 55C, and a microphone 55D. The two joysticks 55A are disposed on both sides of the display 54A. The joysticks 55A receive an input such as selection on a screen of the display 54A and manual operation of the robot 1. For example, the joysticks 55A may receive an input of a moving direction and a moving speed of the robot 1 in the manual operation. The input device 55 may include one joystick 55A or may include two or more joysticks 55A. The keyboard 55C is disposed between the two joysticks 55A. Although not limited, in the present embodiment, the display 54A is slidable. The display 54A slides in a direction of a doubleheaded arrow SD between a position where the keyboard 55C is covered to be hidden and a position where the keyboard 55C is exposed.

Although not limited, in the present embodiment, the display 54A, the joystick 55A, the button switch 55B, and the keyboard 55C are located such that a person can operate the display 54A, the joystick 55A, the button switch 55B, and the keyboard 55C while gripping the handle grips 23b with two hands.

In the present embodiment, the operation terminal 50 has a structure and a size similar to those of a portable game terminal. The operation terminal 50 may be a terminal developed exclusively for the robot 1 or a general-purpose terminal available in the market. The operation terminal 50 according to the present embodiment is a general-purpose terminal, and has a function of the operation terminal 50 by receiving installation of a program for controlling the robot 1. The operation terminal 50 preferably has a size that may be carried by a person. Examples of the operation terminal 50 may include a portable game terminal, a personal computer such as a small notebook computer, a smart device such as a smartphone and a tablet, and other electronic devices.

In the present embodiment, a part of the functions of the input device 55 are implemented by the touch panel-type display 54A. A part of the functions of the input device 55 may be implemented by the handle 23. When the handle 23 is movable, the input device 55 may include a rotation sensor such as an encoder that detects a rotating amount and a rotating speed of the handle 23. The input device 55 may receive the rotating amount and the rotating speed of the handle 23 as input information for operation of the robot 1 or the like. When the handle 23 is immovable, the input device 55 may include a force sensor disposed on the two handle grips 23b or in the vicinity of the two handle grips 23b. The input device 55 may receive a magnitude and direction of a force detected by the force sensor as input information for operation of the robot 1 or the like.

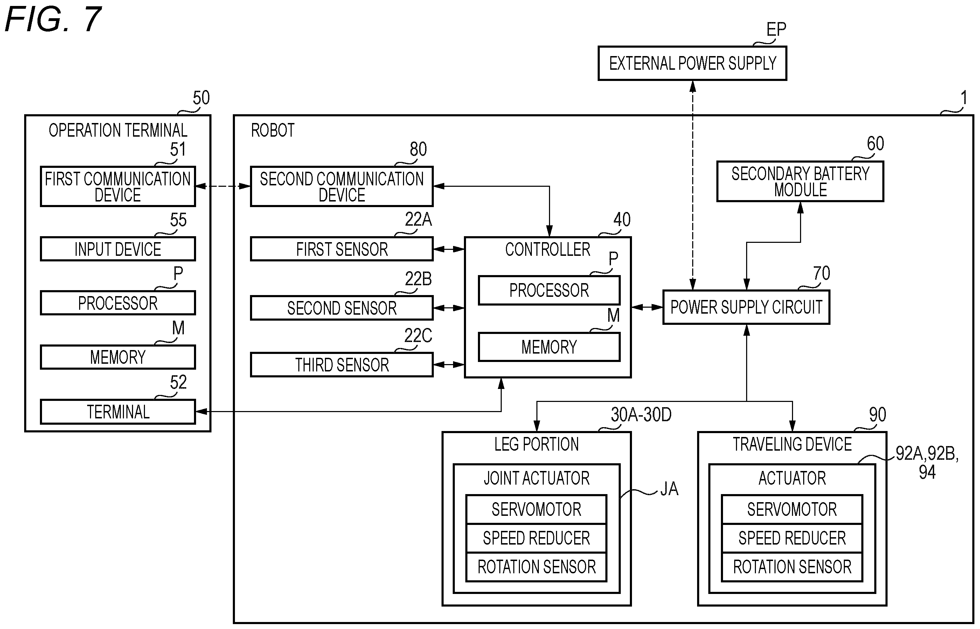

FIG. 7 is a block diagram illustrating an example of a configuration of the controller 40 of the robot 1 according to the embodiment. As illustrated in FIG. 7, the controller 40 includes a computer, and may be, for example, an electronic circuit board, an electronic control unit, or a microcomputer. The controller 40 includes a circuit or a processing circuit, and the circuit or the processing circuit includes a processor P and a memory M. Similarly, the operation terminal 50 also includes a circuit or a processing circuit, and the circuit or the processing circuit includes a processor P and a memory M. In either the controller 40 or the operation terminal 50, the circuit may include a processing circuit. The processor P and the memory M transmit and receive a command, information, data, and the like to and from another device. The processor P and the memory M input a signal from various devices and output a control signal to a control target.

For example, the memory M may include a volatile semi-conductor memory such as a random access memory (RAM), a nonvolatile semi-conductor memory such as a read-only memory (ROM), a hard disk, a solid state drive (SSD), or a combination of two or more thereof. The memory M stores a program to be executed by the processor P, various types of data, and the like.

At least a part of the plurality of functions of the controller 40 and the operation terminal 50 may be implemented by cooperation with the processor P and the memory M. The processor P and the memory M including the RAM and the ROM form a computer system. For example, the computer system may implement the above functions by the processor P executing a program recorded in the ROM using the RAM as a work area.

A part or all of the functions of the controller 40 and the operation terminal 50 may be implemented by the computer system, may be implemented by a dedicated hardware circuit such as an electronic circuit or an integrated circuit, or may be implemented by a combination of the computer system and the hardware circuit. For example, each of the controller 40 and the operation terminal 50 may execute processing by centralized control by a single computer or by distributed control by cooperation of a plurality of computers.

Without being limited to the following, the processor P may include, for example, one or more of a central processing unit (CPU), a micro processing unit (MPU), a graphics processing unit (GPU), a microprocessor, a processor core, a multiprocessor, an application-specific integrated circuit (ASIC), a field programmable gate array (FPGA), and a reconfigurable processor. The processor P may implement processing by a logic circuit or a dedicated circuit which is a hardware circuit formed in an integrated circuit such as an integrated circuit (IC) chip and a large scale integration (LSI). The plurality of functions of each of the controller 40 and the operation terminal 50 may be implemented by an integrated circuit that is individually integrated into one chip, or may be implemented by an integrated circuit that is integrated into one chip so as to include a part or all of the functions.

The controller 40 is connected to the sensors 22A to 22C, the secondary battery module 60, the power supply circuit 70, the second communication device 80, the joint actuators JA of the leg portions 30A to 30D, and the actuators 92A, 92B, and 94 of the traveling device 90.

The controller 40 receives and processes the signal indicating the detection result from the first sensor 22A. In a case where the first sensor 22A includes a three-dimensional camera, the controller 40 may process an image received from the first sensor 22A and detect a capturing object included in the image and a distance between the capturing object and the first sensor 22A. Further, the controller 40 may detect a three-dimensional position of the capturing object. For example, the controller 40 may generate a distance image in which each pixel indicates a three-dimensional position of a capture object by color, shade, or the like, an image indicating information of a capture object in the image by highlighting, marking, or the like, an image including an index such as a traveling direction, or an image obtained by combining two or more of these images. The first sensor 22A may include a processing circuit or the like that performs the image processing. The controller 40 may output a processing result to the operation terminal 50, or may use the processing result for processing to be executed by the controller 40, such as control of the robot 1.

The controller 40 receives and processes the signal indicating the detection result from the second sensor 22B. The controller 40 may process the signal received from the second sensor 22B and detect the angular speed and the acceleration of the body 10. The second sensor 22B may include a processing circuit or the like that performs processing of detecting the angular speed and the acceleration. The controller 40 may output the detection result to the operation terminal 50, or may use the detection result for processing to be executed by the controller 40, such as movement control and posture control of the robot 1.

The controller 40 receives and processes the signal indicating the detection result from the third sensor 22C. The controller 40 may process the signal received from the third sensor 22C and detect the position of the robot 1. The third sensor 22C may include a processing circuit or the like that performs processing of detecting the position of the robot 1. The controller 40 may output the detection result to the operation terminal 50, or may use the detection result for processing to be executed by the controller 40, such as movement control and posture control of the robot 1.

The controller 40 controls connection and communication between the controller 40 and the operation terminal 50. The controller 40 determines a connection method to be executed from wireless connection and wired connection, and establishes a connection by the determined connection method. The controller 40 processes the signal received from the operation terminal 50 and executes the command included in the signal. The controller 40 stores the information and the data included in the signal in the memory M or the like, and uses the information and the data for processing to be executed by the controller 40. The controller 40 transmits various types of information and data to the operation terminal 50. For example, the controller 40 may be configured to transmit information, data, and the like corresponding to a wireless connection state to the operation terminal 50 and transmit information, data, and the like corresponding to a wired connection state to the operation terminal 50.

Although not limited, in the present embodiment, when the controller 40 is connected to the operation terminal 50 by wired connection, the controller 40 performs control so as to transmit and receive a signal to and from the operation terminal 50 and supply power of the secondary battery module 60 to the operation terminal 50. Accordingly, the operation terminal 50 can operate the robot 1 while receiving power supply from the robot 1 via wired connection. When the controller 40 is wirelessly connected to the operation terminal 50, the controller 40 transmits and receives a signal to and from the operation terminal 50. Accordingly, the operation terminal 50 can operate the robot 1 via wireless connection.

For example, the controller 40 may determine the connection method to be executed according to the command received from the operation terminal 50. The operation terminal 50 may transmit a command for executing wireless connection to the controller 40 via wireless communication, or may transmit a command for executing wired connection to the controller 40 via wireless communication or wired communication.

For example, the controller 40 may determine the connection method to be executed according to the signal received from the operation terminal 50. In a case where the signal is received from the operation terminal 50 via wireless communication, the controller 40 may determine to execute wireless connection. In a case where the first terminal 52 of the operation terminal 50 is connected to the terminal 20b, the controller 40 may determine to execute wired connection. In a case where the controller 40 receives the signal from the operation terminal 50 via wired communication after connection between the first terminal 52 and the terminal 20b, the controller 40 may determine to execute wired connection.

The controller 40 may prioritize wired connection between the operation terminal 50 and the controller 40 over wireless connection between the operation terminal 50 and the controller 40. For example, in a case where wired connection between the operation terminal 50 and the controller 40 is established in a state where the operation terminal 50 and the controller 40 are wirelessly connected to each other, the controller 40 may transmit and receive the signal to and from the operation terminal 50 using only wired communication, and may disconnect the wireless communication.

Instead of or in addition to the control by the controller 40, the operation terminal 50 may be configured to prioritize wired connection between the operation terminal 50 and the controller 40 over wireless connection between the operation terminal 50 and the controller 40. For example, in a case where wired connection between the operation terminal 50 and the controller 40 is established in a state where the operation terminal 50 and the controller 40 are wirelessly connected to each other, the operation terminal 50 may transmit and receive the signal to and from the controller 40 using only wired communication, and may disconnect the wireless communication.

The controller 40 and the operation terminal 50 may be configured to use both wireless connection and wired connection between the operation terminal 50 and the controller 40. The controller 40 and the operation terminal 50 may transmit and receive the signal to and from each other via wireless connection between the controller 40 and the operation terminal 50 while supplying power of the secondary battery module 60 to the operation terminal 50 via wired connection between the controller 40 and the operation terminal 50.

The controller 40 is connected to an external power supply EP via the power supply circuit 70. The controller 40 controls charging of power from the external power supply EP to the secondary battery module 60 by controlling the power supply circuit 70.

The controller 40 is connected to the joint actuators JA of the leg portions 30A to 30D via the power supply circuit 70. The controller 40 outputs, to the power supply circuit 70, a command value of a current to the joint actuator JA, and the power supply circuit 70 supplies the current according to the command value from the secondary battery module 60 to the joint actuator JA. The controller 40 acquires a detection result of the rotation sensor of the joint actuator JA and a current value of the joint actuator JA via the power supply circuit 70, and uses the detection result and the current value as feedback information at the time of determining the command value of the current. That is, the controller 40 servo-controls the servomotor of the joint actuator JA.

The controller 40 is connected to the actuators 92A, 92B, and 94 of the traveling device 90 via the power supply circuit 70. The controller 40 outputs a command value of a current to the actuators 92A, 92B, and 94 to the power supply circuit 70, and the power supply circuit 70 supplies the current according to the command value from the secondary battery module 60 to the actuators 92A, 92B, and 94. The controller 40 acquires a detection result of the rotation sensor of each of the actuators 92A, 92B, and 94 and a current value of each actuator via the power supply circuit 70, and uses the detection result and the current value as feedback information at the time of determining the command value of the current. That is, the controller 40 servo-controls the servomotors of the actuators 92A, 92B, and 94.

Here, the operation terminal 50 receives inputs for various settings of the robot 1, setting of an execution task in an autonomous driving mode, setting of a movement destination, selection of a driving mode, selection of an operation mode, manual operation in a manual driving mode, and the like via the input device 55, and transmits a signal indicating the input content to the controller 40.

The driving mode includes the autonomous driving mode and the manual driving mode. In the autonomous driving mode, the controller 40 controls the robot 1 according to a predetermined program so that the robot 1 autonomously executes a designated execution task. In the manual driving mode, the controller 40 controls the robot 1 so that the robot 1 performs an operation according to a manual operation input to the joystick 55A or the like of the operation terminal 50.

The operation mode includes a walking mode and a wheel traveling mode. In the walking mode, the controller 40 controls the robot 1 so that the robot 1 walks with the four leg portions 30A, 30B, 30C, and 30D. In the wheel traveling mode, the controller 40 controls the robot 1 so that the robot 1 travels with the traveling wheels 91A and 91B of the traveling device 90.

The execution task is work to be executed by the robot 1 in the autonomous driving mode, and includes a series of operations of the robot 1. The movement destination is a destination of the movement of the robot 1. The movement destination may be set for the GNSS of the third sensor 22C. The movement destination may be set in either the autonomous driving mode or the manual driving mode.

In the autonomous driving mode, the controller 40 executes a program for autonomous driving according to a command including the execution task, the movement destination, and the like received from the operation terminal 50. For example, the program for autonomous driving in the walking mode includes control data including information such as positions and speeds of the leg portions 30A to 30D to be executed by the robot 1. The program for autonomous driving in the wheel traveling mode includes control data including information such as a position, a moving direction, and a speed of the robot 1 to be executed by the robot 1. The control data may be teaching data set through a teaching operation.

The controller 40 calculates target positions, target speeds, and the like of the leg portions 30A to 30D in the walking mode, and calculates a target position, a target speed, and the like of the robot 1 in the wheel traveling mode, using the control data, processing results of detection signals of the sensors 22A to 22C, and the like. The controller 40 calculates a target position, a target speed, and the like corresponding to a state of a ground surface around the robot 1, a position of an object around the robot 1, and the like by using the processing result related to the detection signal of the first sensor 22A. The controller 40 calculates a target position, a target speed, and the like that balance the robot 1 in accordance with the movement, the posture, and the like of the body 10 by using the processing result related to the detection signal of the second sensor 22B. The controller 40 calculates a target position, a target speed, and the like corresponding to a route to the movement destination by using the processing result related to the detection signal of the third sensor 22C. The controller 40 determines a command value of a current to the joint actuator JA so that the states of the leg portions 30A to 30D become the target position, the target speed, and the like. The controller 40 determines the command value of the current to the actuators 92A and 92B of the traveling device 90 so that the state of the robot 1 becomes the target position, the target speed, and the like.

In the manual driving mode, the controller 40 executes a program for manual driving. The controller 40 receives, from the operation terminal 50, a signal indicating a content of the manual operation input to the joystick 55A or the like of the operation terminal 50.

The controller 40 processes the signal indicating the content of the manual operation according to the program for manual driving, thereby calculating the target positions, the target speeds, and the like of the leg portions 30A to 30D in the walking mode and calculating the target position, the target speed, and the like of the robot 1 in the wheel traveling mode. The controller 40 determines a command value of a current to the joint actuator JA so that the states of the leg portions 30A to 30D become the target position, the target speed, and the like. The controller 40 determines the command value of the current to the actuators 92A and 92B of the traveling device 90 so that the state of the robot 1 becomes the target position, the target speed, and the like.

The controller 40 may use the processing results of the detection signals of the sensors 22A to 22C for calculating the target position, the target speed, and the like. The controller 40 may calculate a target position, a target speed, and the like that avoid collision, contact, and the like between the robot 1 and the ground surface around the robot 1 and the object around the robot 1 by using the processing result related to the detection signal of the first sensor 22A. The controller 40 may calculate a target position, a target speed, and the like that balance the robot 1 in accordance with the movement, the posture, and the like of the body 10 by using the processing result related to the detection signal of the second sensor 22B. Accordingly, even when the command by the manual operation is a simple command indicating the forward movement, the backward movement, the left turn, the right turn, the traveling speed, and the like of the robot 1, the controller 40 can cause the robot 1 to operate in accordance with the situation around the robot 1 and the balance of the robot 1.

The controller 40 may perform control such that the leg portions 30A to 30D and the traveling device 90 are used in combination in accordance with the program, the detection result of the first sensor 22A, or the command from the operation terminal 50 in the walking mode and the wheel traveling mode of each of the autonomous driving mode and the manual driving mode. The controller 40 may calculate the target position, the target speed, and the like so as to balance the leg portions 30A to 30D and the traveling device 90 using the processing results related to the detection signals of the sensors 22A and 22B.

The controller 40 may autonomously execute an operation of switching the operation mode between the walking mode and the wheel traveling mode, or may execute the operation according to the command from the operation terminal 50. For example, the controller 40 may autonomously determine the operation mode according to the state of the ground surface based on the detection result of the first sensor 22A.

The controller 40 may select and discard information, data, and the like to be transmitted to the operation terminal 50 according to the driving mode, the operation mode, wireless connection, wired connection, the state of the operation terminal 50, the command received from the operation terminal 50, or a combination of two or more thereof. The operation terminal 50 may select and discard information, data, and the like received from the controller 40 according to the driving mode, the operation mode, wireless connection, wired connection, the state of the operation terminal 50, the command input to the operation terminal 50, or a combination of two or more thereof, and may change one or both of an object and a screen itself displayed on the display 54A.

For example, the operation terminal 50 may change one or both of the object and the screen itself displayed on the display 54A according to the state of the operation terminal 50 on whether the operation terminal 50 is attached to the robot 1. For example, one or both of the operation terminal 50 and the robot 1 may include a proximity sensor or a contact sensor, and may detect whether the operation terminal 50 is attached to the robot 1 based on a detection result of the sensor. The proximity sensor may have a known structure, for example, may use a magnetic field or an electric field. One or both of the operation terminal 50 and the robot 1 may detect whether the operation terminal 50 is attached to the robot 1 based on whether the terminals 52 and 20b are connected.

For example, the operation terminal 50 may display a first object, a first screen, or a combination of the first object and the first screen on the display 54A in a state where the operation terminal 50 is attached to the robot 1. The first object and the first screen are used when a person is on the body 10. For example, the operation terminal 50 may display a second object, a second screen, or a combination of the second object and a second screen on the display 54A in a state where the operation terminal 50 is detached from the robot 1. The second object and the second screen are used when a person is away from the robot 1.

For example, the operation terminal 50 may change one or both of the object and the screen itself displayed on the display 54A according to the state of the operation terminal 50, which is a distance between the operation terminal 50 and the robot 1. One or both of the operation terminal 50 and the robot 1 may include a sensor capable of detecting a distance to an object, such as a proximity sensor, a contact sensor, and a sensor exemplified as the first sensor 22A. For example, the operation terminal 50 may display the first object, the first screen, or the combination of the first object and the first screen on the display 54A when the detected distance is equal to or less than a threshold, and may display the second object, the second screen, or the combination of the second object and the second screen on the display 54A when the detected distance exceeds the threshold. The operation terminal 50 may change one or both of the object and the screen itself displayed on the display 54A according to a result of combining information on whether the operation terminal 50 is attached to the robot 1 and information on the distance between the operation terminal 50 and the robot 1.

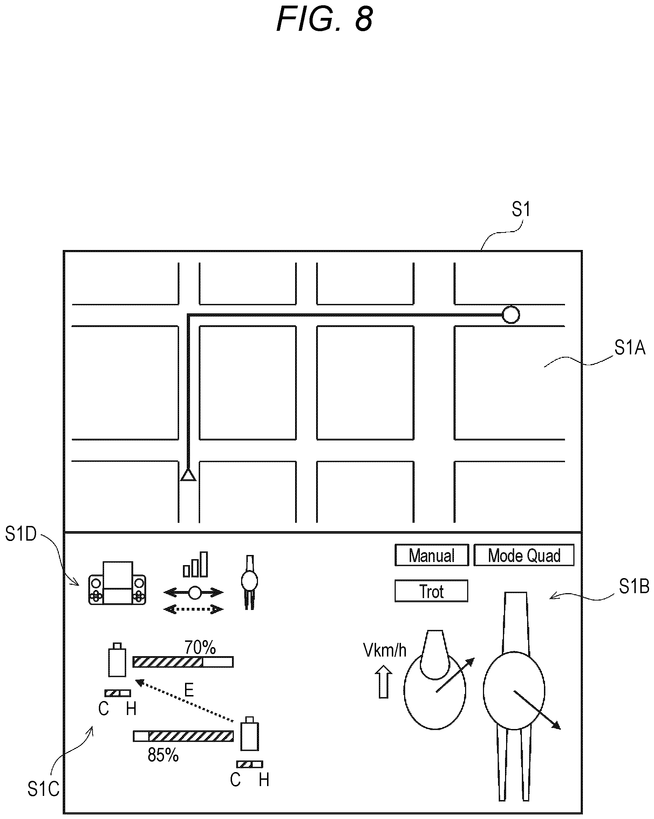

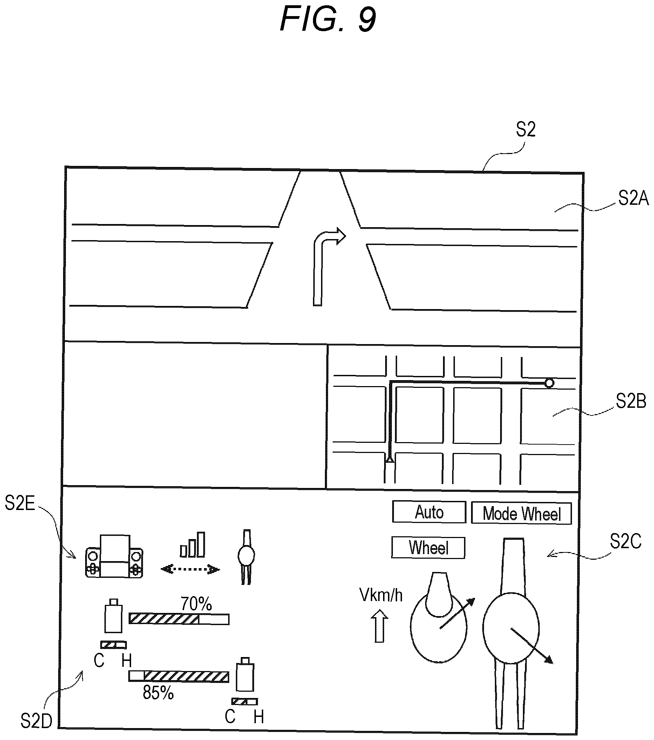

FIG. 8 is a diagram illustrating an example of the first screen displayed on the operation terminal 50 according to the embodiment. FIG. 9 is a diagram illustrating an example of the second screen displayed on the operation terminal 50 according to the embodiment. As illustrated in FIG. 8, a first screen S1 includes a display object suitable for an operation on the robot 1. Although not limited, in the present embodiment, the display object includes a map S1A indicating the position of the robot 1, an operation state S1B of the robot 1, a battery state S1C, and a communication state S1D. The operation terminal 50 receives, from the controller 40, a map indicating the position of the robot 1 and information on the operation state of the robot 1 and the state of the secondary battery module 60. The first object may include one or more display objects included in the first screen S1.

The position of the robot 1, the intended route, and the like are represented on the map, which may be generated by the controller 40 or the operation terminal 50 using the detection result of the third sensor 22C or the like. The operation state of the robot 1 may include the moving speed, the posture, a center-of-gravity balance, a gait state, the driving mode, the operation mode, and the like of the robot 1. The battery state may include a residual capacity and a temperature of the secondary battery of the operation terminal 50 and the secondary battery module 60, and a state of power supply from the secondary battery module 60 to the operation terminal 50. The communication state indicates communication used between the operation terminal 50 and the controller 40.

As illustrated in FIG. 9, the second screen S2 includes a display object suitable for remote control of the robot 1. Although not limited, in the present embodiment, the display object includes either image or both images S2A of an image acquired by the camera of the first sensor 22A and an image after image processing of the image, a map S2B indicating the position of the robot 1, an operation state S2C of the robot 1, a battery state S2D, and a communication state S2E. The display object may include the state of the ground surface around the robot 1, the position of the object around the robot 1, and the like detected based on the processing result related to the detection signal of the first sensor 22A. The second object includes at least one or both of an image of the first sensor 22A and an image after image processing of the image among display objects included in the second screen S2. The image after the image processing may be a distance image, an image indicating information of a capture object in the image, an image including an index, or a combination of these images.

For example, the operation terminal 50 may change one or both of the object and the screen itself displayed on the display 54A between a state where the operation terminal 50 and the controller 40 are wirelessly connected and a state where the operation terminal 50 and the controller 40 are connected by wired connection. For example, in the state where the operation terminal 50 and the controller 40 are connected by wired connection, the operation terminal 50 may display, on the display 54A, the first object, the first screen S1, or a combination of the first object and the first screen S1. In the state where the operation terminal 50 and the controller 40 are wirelessly connected, the second object, the second screen S2, or a combination of the second object and the second screen S2 may be displayed on the display 54A. In a state where the operation terminal 50 and the controller 40 are connected by wired connection and wirelessly connected, the first object, the first screen S1, or a combination of the first object and the first screen S1 may be displayed on the display 54A.

In the robot 1 according to the above embodiment, the proximal joints 31A to 31D of the leg portions 30A to 30D are bent around two axes of the pitching direction and the rolling direction with respect to the body 10, but the present disclosure is not limited thereto. For example, the proximal joints 31A to 31D may be bent around two axes of the pitching direction and a yawing direction, around two axes of the rolling direction and the yawing direction, or around another two axes with respect to the body 10 when the intermediate links 33A to 33D extend in the down direction Dd. The proximal joints 31A to 31D may be bent around three or more axes with respect to the body 10.

In the robot 1 according to the embodiment, the intermediate joints 32A to 32D of the leg portions 30A to 30D are bent in the pitching direction with respect to the body 10, but the present disclosure is not limited thereto. For example, the intermediate joints 32A to 32D may be bent in the yawing direction, the rolling direction, or another direction with respect to the body 10 when the leg portions 30A to 30D extend in the down direction Dd. The intermediate joints 32A to 32D may be bent around two or more axes. When one leg portion includes two or more intermediate joints, bending directions of the intermediate joints may be the same as or different from each other.

The appearance of the robot 1 according to the embodiment is not limited to the appearance imitating a four-limbed mammal. For example, the appearance of the robot 1 excluding the leg portions 30A to 30D may be any appearance. For example, the appearance of the robot 1 excluding the leg portions 30A to 30D may be an appearance imitating various vehicles such as a motorcycle, a bicycle, an automatic vehicle including three or more wheels, a ship, and an aircraft.

### (Modification)

The robot 1 according to the embodiment is a quadruped walking robot including the leg portions 30A to 30D as a moving device, but the robot is not limited to the quadruped walking robot. The robot may be a humanoid that walks with two legs, or may be a robot including a transport vehicle. The robot may be configured to be able to move while carrying a person.

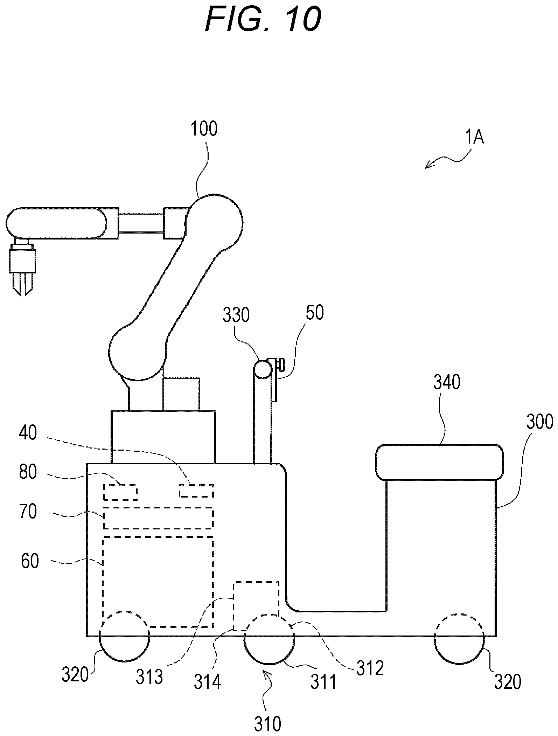

For example, FIG. 10 is a side view illustrating an example of a configuration of a robot 1A according to a modification. As illustrated in FIG. 10, the robot 1A includes a carriage 300, a robot arm 100 disposed on the carriage 300, the controller 40, and the operation terminal 50. Although one robot arm 100 is disposed, two or more robot arms 100 may be disposed. The robot arm 100 includes one or more joints and an actuator that drives the one or more joints. The actuator is controlled by the controller 40.

The carriage 300 includes a traveling device 310 and two or more driven wheels 320. The traveling device 310 includes traveling wheels 311 and 312 that are coaxially disposed, and actuators 313 and 314 that rotationally drive the traveling wheels 311 and 312. The two or more driven wheels 320 and the traveling wheels 311 and 312 are disposed so as to simultaneously come into contact with a support surface that supports the carriage 300. The driven wheel 320 can freely change a traveling direction, and is, for example, a free caster. The actuators 313 and 314 are controlled by the controller 40 similarly to the traveling device 90.

The robot 1A includes a handle 330 and a seat portion 340 provided in the carriage 300. The seat portion 340 has a size that allows one or more persons to sit thereon. The robot 1A further includes the controller 40, the secondary battery module 60, the power supply circuit 70, and the second communication device 80 in the carriage 300.

The operation terminal 50 is configured to be attachable to and detachable from the carriage 300 or the handle 330. For example, the operation terminal 50 may be attached to a holder attached to the carriage 300, a recess formed in the carriage 300, or a combination thereof. The operation terminal 50 may be attached to a holder attached to the handle 330. The operation terminal 50 in a state of being attached to the robot 1A is disposed at a position in the vicinity of the handle 330 such that a person can operate the operation terminal 50 while gripping the handle 330 with one or both of two hands.

Since other configurations of the robot 1A according to the modification are the same as those of the embodiment, the description thereof will be omitted. With the robot 1A according to the modification, the same effects as those of the robot 1 according to the embodiment can be exerted.

In the robot 1A according to the modification, the carriage 300 is configured to move using the wheels 311, 312, and 320, but the present disclosure is not limited thereto. For example, the carriage 300 may be configured to move using a crawler.

The robot 1A according to the modification is configured such that a person sits on the seat portion 340 and rides on the carriage 300, but may be configured such that a person rides on the carriage 300 in a standing state.

In the robot 1A according to the modification, the type of the robot arm 100 is a vertical articulated type, but the present disclosure is not limited thereto. For example, for example, the type of the robot arm 100 may be a horizontal articulated type, a polar coordinate type, a cylindrical coordinate type, a Cartesian coordinate type, or another type.

### (Other Embodiments)

Although the embodiment of the present disclosure has been described above, the present disclosure is not limited to the above embodiment and modification. That is, various modifications and improvements may be made within the scope of the present disclosure. For example, embodiments obtained by applying various modifications to the embodiment and the modification, and embodiments constructed by combining different constituent elements in the embodiment and the modification are also included in the scope of the present disclosure.

For example, in the robots 1 and 1A according to the embodiment and the modification, an actuator includes a servomotor as a drive source, and the servomotor has a structure of a rotary electric motor, but the drive source of the actuator is not limited to a rotary electric motor. For example, the actuator may include, as the drive source, a rotary electric motor, a direct-acting electric motor, a rotary hydraulic pressure or gas pressure motor, a direct-acting hydraulic pressure or gas pressure motor, or a combination of two or more thereof. The various motors may be or may not be a servomotor.

The robots 1 and 1A according to the embodiment and the modification use the secondary battery module 60 as a power source, but the present disclosure is not limited thereto. For example, the robots 1 and 1A may use an external power supply such as a commercial power source as the power source. In this case, the robots 1 and 1A may be electrically connected to the external power supply via a wire or contact, and may operate while receiving power supply from the external power supply.

The robots 1 and 1A according to the embodiment and the modification may further include an operation device other than the operation terminal 50. For example, the robot may include an operation device in a main body. The operation device may include an input device having functions similar to at least a part of the functions of the input device 55 of the operation terminal 50, and may include an input device different from the input device 55. The input device of the operation device may have a structure suitable for an operation of a person riding on the robot, and may be disposed on a handle or may include a handle, for example. The operation terminal 50 and the operation device may be configured such that in a case where the operation terminal 50 is attached to the robot 1 or 1A, at least a part of the functions of the operation terminal 50 is implemented by the operation device. The operation terminal 50 and the operation device may be configured to simultaneously function, or may be configured to alternatively function with each other.

The robots 1 and 1A according to the embodiment and the modification are configured such that a person sits on a seat portion and rides on the robot, but the present disclosure is not limited thereto. The robot according to the present disclosure should be able to carry a person. For example, the robots 1 and 1A may be configured such that a person rides on the robot in a standing state or a laying state.

Examples of aspects of the technique of the present disclosure are as follows. A robot according to an aspect of the present disclosure includes: a main body on which a person is carried; a handle to be gripped by the person on the main body; a moving device configured to move the main body; an operation terminal attachable to and detachable from the robot and configured to receive an input of a command related to an operation of the robot; and a control device configured to control the robot in accordance with the command received from the operation terminal. In a state where the operation terminal is attached to the robot, the operation terminal is disposed at a position where the operation terminal is operated while the handle is gripped by the person.

According to the above aspect, the operation terminal attached to the robot may function as a robot-mounted operation device that may be operated by an operator who grips the handle. Accordingly, the number of operation devices mounted on the robot may be reduced. Further, the operation terminal detached from the robot may function as a remote controller of the robot. The operation terminal may function as a robot-mounted operation device or a remote operation device of a robot. Accordingly, an operation of a user in both a riding state and a non-riding state on the robot may be performed with a simple configuration using one operation terminal.

In the robot according to the aspect of the present disclosure, the operation terminal may include a display and an operation element to be operated by the person, and in a state where the operation terminal is attached to the robot, the operation element may be disposed at a position where the operation element is operated while the handle is gripped by the person. According to the above aspect, the operation element of the operation terminal attached to the robot may be operated by an operator gripping the handle. Accordingly, the number of operation elements mounted on the robot may be reduced.

In the robot according to the aspect of the present disclosure, the operation element may include a plurality of joysticks arranged on both sides of the display, and in a state where the operation terminal is attached to the robot, the plurality of joysticks may be arranged at positions where the plurality of joysticks are operated while the handle is gripped by the person.

According to the above aspect, since the joystick can freely move, the operation of the robot is simplified. The operation terminal including the joystick enables an operation of the robot with an operation feeling like a game operation device, for example. Further, the joystick of the operation terminal attached to the robot may be operated by an operator gripping the handle. Since there is a display between the joysticks, the operator can easily view the display while operating the joystick. The operation terminal enables an operation of the robot in a sense like a game operation in both remote control of the robot and operation on the robot.

In the robot according to the aspect of the present disclosure, the operation terminal may include a display, and the operation terminal may selectively display a first screen used when the person is on the main body and a second screen used when the person is away from the robot. According to the above aspect, the operation terminal can display an appropriate screen for each of the remote operation of the robot and the operation on the robot. Accordingly, the operation terminal can facilitate the operation of the operator

In the robot according to the aspect of the present disclosure, the operation terminal may display the first screen in a state of being attached to the robot, and may display the second screen in a state of being detached from the robot. According to the above aspect, the operation terminal can switch the display screen according to attachment or detachment of the operation terminal to or from the robot. For example, the operation terminal may detect attachment or detachment of the operation terminal to or from the robot, a distance between the robot and the operation terminal, or both, and autonomously switch the screen based on a detection result. The operation terminal may switch the screen according to a command input to the operation terminal by the operator. For example, the command may be switching of a screen, switching of an operation, switching of a communication mode with the control device, or a combination of two or more thereof.

The robot according to the aspect of the present disclosure may further include a camera, and the operation terminal may display, on the second screen, one or both of an image acquired by the camera and an image after image processing of the image. According to the above aspect, the operation terminal displays an image of the camera or the like at the time of remotely operating the robot. Accordingly, the operation terminal can facilitate the operation of the operator.

In the robot according to the aspect of the present disclosure, the operation terminal may include a wireless communication device configured to perform wireless communication with the control device and a terminal connected to the control device by wired connection, and the operation terminal may operate the robot by sending a command to the control device via either wireless communication or wired communication. According to the above aspect, the operation terminal can communicate with the control device via one or both of wireless communication and wired communication to operate the robot. This enables reliable communication between the operation terminal and the control device.

In the robot according to the aspect of the present disclosure, the operation terminal may communicate with the control device by prioritizing wired connection between the terminal and the control device over wireless connection between the wireless communication device and the control device. According to the above aspect, the operation terminal can more reliably establish connection between the operation terminal and the control device. For example, in a case where the operation terminal is connected to the control device by the wired connection in a state where the operation terminal is wirelessly connected to the control device, the operation terminal can prioritize communication via the wired connection to ensure communication.

In the robot according to the aspect of the present disclosure, the operation terminal may include a display, and the operation terminal may display different screens on the display between a state where the wireless communication device and the control device are wirelessly connected and a state where the terminal and the control device are connected by the wired connection.

According to the above aspect, the operation terminal switches the screen according to the connection state with the control device. For example, the operation terminal may display a first screen for operation on the robot in the case of a wired connection state, and may display a second screen for remote operation in the case of a wireless connection state. The operation terminal can display a screen suitable for an operation situation of the operator based on the connection state.

The robot according to the aspect of the present disclosure may further include a battery as a power source, the operation terminal further includes a secondary battery as a power source, and the operation terminal receives power supply from the battery of the robot via wired connection between the terminal and the control device. According to the above aspect, the operation terminal can receive power supply from the battery of the robot via wired connection between the operation terminal and the control device. The operation terminal can be operated stably for a long time.

In the robot according to the aspect of the present disclosure, the operation terminal may communicate with the control device while receiving power supply from the battery of the robot via wired connection between the terminal and the control device. According to the above aspect, the operation terminal can reliably perform communication with the control device and power acquisition from the battery of the robot via wired connection between the operation terminal and the control device.

In the robot according to the aspect of the present disclosure, the operation terminal may communicate with the control device via wireless connection between the wireless communication device and the control device while receiving power supply from the battery of the robot via wired connection between the terminal and the control device. According to the above aspect, a device for wired communication between the operation terminal and the control device is unnecessary. Structures of the operation terminal and the robot may be simplified.

In the robot according to the aspect of the present disclosure, the moving device may include two or more leg portions coupled to the main body and configured to perform a bending operation, each of the two or more leg portions including two or more joints, and a plurality of joint actuators configured to drive the plurality of joints, and the control device may control the plurality of joint actuators. According to the above aspect, the operation terminal may perform a remote operation and an operation on a robot with respect to a robot which walks using a leg portion and on which a person can be carried.

In the robot according to the aspect of the present disclosure, the moving device may include one or more wheels which are rotatable, and one or more wheel actuators configured to drive the one or more wheels, and the control device may control the one or more wheel actuators. According to the above aspect, the operation terminal may perform a remote control and an operation on a robot with respect to a robot that travels using a wheel and on which a person can be carried.

The functions of the elements disclosed in the present specification can be executed using a circuit or a processing circuit including a general-purpose processor, a dedicated processor, an integrated circuit, an ASIC, a conventional circuit, and/or a combination thereof configured or programmed to execute the disclosed functions. The processor includes a transistor and other circuits, and thus is regarded as a processing circuit or a circuit. In the present disclosure, the circuit, the unit, and the means are hardware that executes the listed functions or hardware that is programmed to execute the listed functions. The hardware may be the hardware disclosed in the present specification, or may be another known hardware configured or programmed to execute the listed functions. When the hardware is a processor considered as a kind of circuit, the circuit, the means, or the unit is a combination of hardware and software, and the software is used for the hardware and/or processor.

The numbers such as the ordinal number and the quantity used above are all illustrated for specifically describing the technique of the present disclosure, and the present disclosure is not limited to the illustrated numbers. The connection relation between the components is exemplified for specifically describing the technique of the present disclosure, and the connection relation implementing the function of the present disclosure is not limited thereto.

Since the scope of the present disclosure is defined by the appended claims rather than the descriptions of the specification so that the present disclosure can be implemented in various forms without departing from the scope of the essential features thereof, the exemplary embodiments and modifications are illustrative and not limited. All changes and equivalents of the claims and the scope thereof are intended to be included in the claims.

## Claims

1. A robot comprising:
a main body on which a person is carried;
a handle to be gripped by the person on the main body;
a moving device configured to move the main body;
an operation terminal attachable to and detachable from the robot and configured to receive an input of a command related to an operation of the robot; and
a control device configured to control the robot in accordance with the command received from the operation terminal, wherein
in a state where the operation terminal is attached to the robot, the operation terminal is disposed at a position where the operation terminal is operated while the handle is gripped by the person.

2. The robot according to claim 1, wherein
the operation terminal includes a display and an operation element to be operated by the person, and
in the state where the operation terminal is attached to the robot, the operation element is disposed at a position where the operation element is operated while the handle is gripped by the person.

3. The robot according to claim 2, wherein
the operation element includes a plurality of joysticks arranged on both sides of the display, and
in the state where the operation terminal is attached to the robot, the plurality of joysticks are arranged at positions where the plurality of joysticks are operated while the handle is gripped by the person.

4. The robot according to any of claims 1 to 3, wherein
the operation terminal includes a display, and
the operation terminal selectively displays a first screen used when the person is on the main body and a second screen used when the person is away from the robot.

5. The robot according to claim 4, wherein
the operation terminal displays the first screen in the state of being attached to the robot, and displays the second screen in a state of being detached from the robot.

6. The robot according to claim 4 or 5, wherein
the robot further includes a camera, and
the operation terminal displays, on the second screen, one or both of an image acquired by the camera and an image after image processing of the image.

7. The robot according to any of claims 1 to 6, wherein
the operation terminal includes a wireless communication device configured to wirelessly communicate with the control device and a terminal connected to the control device by wired connection, and
the operation terminal operates the robot by sending a command to the control device via either wireless communication or wired communication.

8. The robot according to claim 7, wherein
the operation terminal communicates with the control device by prioritizing the wired connection between the terminal and the control device over wireless connection between the wireless communication device and the control device.

9. The robot according to claim 7 or 8, wherein
the operation terminal includes a display, and
the operation terminal displays different screens on the display between a state where the wireless communication device and the control device are wirelessly connected and a state where the terminal and the control device are connected by the wired connection.

10. The robot according to any of claims 7 to 9, wherein
the robot further includes a battery as a power source,
the operation terminal further includes a secondary battery as a power source, and
the operation terminal receives power supply from the battery of the robot via the wired connection between the terminal and the control device.

11. The robot according to claim 10, wherein
the operation terminal communicates with the control device while receiving the power supply from the battery of the robot via the wired connection between the terminal and the control device.

12. The robot according to claim 10, wherein
the operation terminal communicates with the control device via wireless connection between the wireless communication device and the control device while receiving the power supply from the battery of the robot via the wired connection between the terminal and the control device.

13. The robot according to any of claims 1 to 12, wherein
the moving device includes:
two or more leg portions coupled to the main body and configured to perform a bending operation, each of the two or more leg portions including two or more joints; and
a plurality of joint actuators configured to drive the plurality of joints, and
the control device controls the plurality of joint actuators.

14. The robot according to any of claims 1 to 13, wherein
the moving device includes:
one or more wheels which are rotatable; and
one or more wheel actuators configured to drive the one or more wheels, and
the control device controls the one or more wheel actuators.
